Europäisches Patentamt

European Patent Office

Office européen des brevets

(11) Veröffentlichungsnummer: **0 160 708**
**B1**

(12) # EUROPÄISCHE PATENTSCHRIFT

(45) Veröffentlichungstag der Patentschrift:
04.10.89

(51) Int. Cl.⁴: **B 65 D 88/76, B 09 B 5/00**

(21) Anmeldenummer: **84104938.0**

(22) Anmeldetag: **02.05.84**

(54) **Verfahren zum Verfüllen von unterhalb der Erdoberfläche befindlichen Hohlräumen, wie stationär gelagerten Grossbehältern.**

(43) Veröffentlichungstag der Anmeldung:
**13.11.85 Patentblatt 85/46**

(45) Bekanntmachung des Hinweises auf die Patenterteilung:
**04.10.89 Patentblatt 89/40**

(84) Benannte Vertragsstaaten:
**AT BE CH DE FR GB IT LI LU NL SE**

(56) Entgegenhaltungen:
**DE-A-3 318 505**
**DE-C-3 219 875**
**FR-A-2 143 389**
**NL-A-8 004 220**

(73) Patentinhaber: **Wilhelm Geiger GmbH & Co.,**
**D-8980 Oberstdorf (DE)**

(72) Erfinder: **Stürmer, Jörg, Dipl.- Ing.,**
**Königseggstrasse 4a, D-8976 Blaichach (DE)**
Erfinder: **Kerl, Thomas, Eicherringweg 22, D-8960**
**Kempten (DE)**

(74) Vertreter: **Jung, Elisabeth, Patentanwälte Dr.**
**Jung, Dr. Schirdewahn Dr. Schmitt- Nilson**
**Postfach 40 14 68 Clemensstrasse 30, D-8000**
**München 40 (DE)**

## Beschreibung

Die Erfindung betrifft ein Verfahren nach dem Oberbegriff des Anspruchs 1. Ein derartiges Verfahren, bei dem als Verfüllmasse ein Schaumbeton eingepumpt wird, ist z. B. bekannt aus NL-A-8 004 220.

Aus Umweltschutzgründen und auch zum Schutz der Bevölkerung vor Unfallschäden müssen Hohlräume unterhalb der Erdoberfläche verfüllt werden. Früher hat man z. B. aufgelassene Heizöl- oder Dieselöltanks in ungefülltem Zustand einfach im Erdreich belassen. Durch Korrosion und Verrostung zerfiel aber im Lauf der Jahre ein Teil der Stützwände der Behälter und das darüber befindliche Erdreich fiel in den dadurch freigelegten Hohlraum herab. Hierdurch entstanden in der Erdoberfläche tiefe Löcher, die unfallträchtig waren. Das gleiche Problem stellt sich z. B. auch bei aufgelassenen Leitungssystemen und insbesondere bei Abwasserkanälen.

Die gesetzlichen Bestimmungen verlangen jetzt, daß solche Großbehälter bzw. Leitungssysteme oder beim Straßenbau für den Einbau von Rohren geschaffene Hohlräume verfüllt werden.

Aus der Praxis ist auch das Verfüllen per Hand mit einem Gemisch aus Sand und Wasser bekannt, wobei die feuchte Masse so weit als möglich in schwer zugängliche Hohlraumbereiche durch Arbeiter mit Schaufeln verteilt wird, was aber wegen der Setzung des Sandes zu Schwierigkeiten führt. Es kann daher letztlich nicht gewährleistet werden, daß der betreffende unterhalb der Erdoberfläche befindliche Hohlraum tatsächlich vollständig verfüllt ist, so das weiterhin Verrottungsschäden auftreten und meist auch bewußt in Kauf genommen werden, da ein Ausgraben solcher Großbehälter und Leitungssysteme und ihre Zerlegung in Schrott zu kostspielig ist.

So wurden bei der Deutschen Bundesbahn die meisten für die Befeuerung der Diesellokomotiven benötigten Dieselöltanks direkt im Gleisbereich eingegraben. Solche Tanks können nach Auflassung nur an Ort und Stelle verfüllt werden.

Aufgabe der Erfindung ist es, die vorstehend geschilderten Mängel zu beheben und ein vollständiges Verfüllen von Hohlräumen auch bei komplizierter geometrischer Raumform sicherzustellen.

Im Hinblick auf die zu verfüllenden, sehr großen Hohlraumvolumina von beispielsweise 100 000 Litern und mehr ist es außerdem Aufgabe der Erfindung, für ein solches Verfüllverfahren billige Abfallstoffe einzusetzen, wobei aber die erforderliche Standfestigkeit der Füllung gewährleistet bleibt.

Diese Aufgabe wird durch das erfindungsgemäße Verfahren gelöst, welches dadurch gekennzeichnet ist, daß das Gemisch aus einem vorgefertigten fließfähigen Gemisch aus Feinstsanden (vgl. DIN-Norm 4226) und/oder Steinmehlen (vgl. Norm TL-Min 78), wie sie als Abfallprodukte bei der Kiesgewinnung anfallen, und Wasser mit einem Wassergehalt von 25 bis 40 Gew.-% und einem Gehalt von bis zu 5 Gewichtsprozent an einem oder mehreren hydraulischen Bindemittel(n) besteht. Gegebenenfalls enthält das Gemisch latent-hydraulischen Zusatzstoffen. Das erfindungsgemäß eingesetzte Verfüllungsgemisch ist zum Zeitpunkt des Verfüllens soweit fließfähig, daß es maschinell direkt in den betreffenden Hohlraum gefördert werden kann. Sehr zweckmäßig wird es in einem Betonfahrmischer an die Einbaustelle transportiert und dann je nach den örtlichen Gegebenheiten direkt in den Hohlraum abgelassen oder über eine gewisse Entfernung mittels Pumpen, Rutschen, Rinnen oder Rohren zur Einbaustelle und in den Hohlraum gefördert. Das Gemisch verteilt sich ohne Nachhilfe per Hand wie eine Flüssigkeit von selbst in dem Hohlraum und füllt daher auch schwer zugängliche Bereiche aus. Nach relativ kurzer Zeit verfestigt sich das Gemisch und ist in der Regel am folgenden Tag begehbar. Im trockenen Zustand weist es eine Standfestigkeit von etwa 0,15 bis 5 $N/mm^2$ auf, wodurch ein Einbeulen der Behälterwandungen oder Leitungssysteme mit nachfolgenden Verrottungsschäden mit Sicherheit vermieden wird.

Andererseits liegt die Standfestigkeit weit unter der Festigkeit üblicher Betone, so daß es im Bedarfsfall ohne weiteres möglich ist, z. B. einen Heizöltank durch Herausbrechen der verfestigten Masse wieder verwendbar zu machen.

Die Feststoffbestandteile der erfindungsgemäßen Verfüllungsmasse bestehen im wesentlichen aus Feinstsanden (vgl. Norm 4226) und /oder Steinmehlen (vgl. TL-Min. 78). Diese fallen in Kieswerken beim Auswaschen des Kieses bzw. beim Brechen oder Mahlen von Gestein an. Sehr zweckmäßig lassen sich Abfallschlämme von Kiesgruben verwenden, welche je nach Witterung und Waschmethode einen Wassergehalt zwischen 25 und 50 % aufweisen.

Auch in der Umgebung einer Einbaustelle befindliche Vorkommen von mehlfeinen Stoffen, z. B. Rückständen aus Müllverbrennungsanlagen, lassen sich für die Zwecke der Erfindung einsetzen.

Je nach der Kornzusammensetzung der Mineralbestandteile liegt der Wassergehalt des fließfähigen Verfüllungsgemisches zwischen 25 und 40 %. Als zweckmäßig haben sich Wassergehalte zwischen 28 und 35 % erwiesen. Im allgemeinen lassen sich Gemische mit einem Wassergehalt von etwa 30 % gut zum Verfüllen verwenden.

Als hydraulisches Bindemittel eignet sich vor allem Portlandzement. Die Konzentration der Bindemittel im Gemisch beträgt zweckmäßig 2 bis 5 Gewichtsprozent und insbesondere 3 Gewichtsprozent. Diese Bindemittelkonzentrationen ermöglichen eine ausreichende Standfestigkeit, ohne daß der Betonzustand erreicht wird, der oft unerwünscht wäre.

Die Einbaufähigkeit des Verfüllungsgemisches läßt sich durch einen Zusatz vor latent-hydraulischen Zusatzstoffen, wie Elektrofilterasche und /oder andere Puzzolane, noch verbessern. Diese Zusatzstoffe werden im allgemeinen in Mengen von bis zu 5 Gewichtsprozent und vorzugsweise von 1,0 bis 4,0 Gewichtsprozent mitverwendet. In der Praxis hat sich insbesondere ein Zusatz von Elektrofilterasche in Mengen von etwa 3,0 Gewichtsprozent bewährt.

**Ausführungsbeispiel**

Ein aufgelassener Heizöltank von 100 000 Litern Fassungsvermögen, der im Freien eingegraben war, wurde innerhalb weniger Stunden direkt von einem Betonfahrmischer aus verfüllt. Die Kippmenge des Fahrmischers betrug jeweils ca. 5 m³ fließfähiges Verfüllungsgemisch. Die Mischfahrzeuge wurden direkt an den Einfüllstutzen des Tanks herangefahren und dann wurde die fließfähige Mischung nach unten abgelassen.

Das Verfüllungsgemisch bestand aus Klärteichschlamm mit einem Wassergehalt von ca. 25 %. Durch Zusatz von weiterem Wasser wurde ein Wassergehalt von etwa 30 % eingestellt. Diesem Mineralstoff-Wassergemisch wurde Portlandzement des Typs 35 F in einer Konzentration von 3 Gewichtsprozent, bezogen auf das Gesamtgemisch, zugesetzt. Außerdem enthielt das Gemisch 3,0 Gewichtsprozent Elektrofilterasche.

Der Heizöltank wurde vollständig durch die Verfüllmasse ausgefüllt, was anhand der Menge der eingefüllten fließfähigen Masse kontrolliert wurde. Es trat keine Wasserabsetzung ein, sondern das eingefüllte Gemisch war nach kurzer Zeit in sich verfestigt, was auf die Zugabe der Bindemittel-Zusatzstoffe zurückzuführen ist.

**Patentansprüche**

1. Verfahren zum Verfüllen von unterhalb der Erdoberfläche befindlichen Hohlräumen, wie stationär gelagerten Großbehältern, Leitungssystemen und Abwasserkanälen, mittels eines Mineralstoff-Wassergemisches, wobei man das Gemisch an der Einbaustelle maschinell in den zu verfüllenden Hohlraum fördert, dadurch gekennzeichnet, daß das Gemisch aus einem vorgefertigten fließfähigen Gemisch aus Feinstsanden (vgl. DIN-Norm 4226) und/oder Steinmehlen (vgl. Norm TL-Min. 78), wie sie als Abfallprodukte bei der Kiesgewinnung anfallen, und Wasser mit einem Wassergehalt von 25 bis 40 Gewichts-% und einem Gehalt von bis zu 5 Gewichts-% an hydraulischem(n) Bindemittel(n) besteht.

2. Verfahren nach Anspruch 1, dadurch gekennzeichnet, daß das fließfähige Verfüllungsgemisch 28 bis 35 Gewichts-% und insbesondere etwa 30 Gewichts-% Wasser enthält.

3. Verfahren nach Anspruch 1 und 2, dadurch gekennzeichnet, daß das fließfähige Verfüllungsgemisch 2 bis 5 Gewichts-% und insbesondere etwa 3 Gewichts-% hydraulische(s) Bindemittel enthält.

4. Verfahren nach Anspruch 1 bis 3, dadurch gekennzeichnet, daß das fließfähige Verfüllungsgemisch zusätzlich bis zu 5 Gewichts-%, vorzugsweise 1,0 bis 4,0 Gewichts-% und insbesondere etwa 3,0 Gewichts-% an hydraulischem(n) Zusatzstoff(en) enthält.

5. Verfahren nach Anspruch 4, dadurch gekennzeichnet, das man als latent-hydraulischen Zusatzstoff Elektrofilterasche und/oder andere Puzzolane verwendet.

6. Verfahren nach Anspruch 1 bis 5, dadurch gekennzeichnet, daß man das vorgefertigte fließfähige Gemisch mittels eines Betonfahrmischers zur Einbaustelle transportiert.

7. Verfahren nach Anspruch 1 bis 6, dadurch gekennzeichnet, das man das fließfähige Gemisch mittels Pumpen in den zu verfüllenden Hohlraum fördert.

8. Verfahren nach Anspruch 1 bis 6, dadurch gekennzeichnet, das man das fließfähige Gemisch mittels einer(s) geneigten Rutsche, Rinne oder Rohrs in den zu verfüllenden Hohlraum fördert.

**Claims**

1. Process for filling cavities underneath the earth's surface, like stationary embedded containers, pipe-line systems and sewers, by means of a mineral-water mixture, the mixture at the point of insertion being conveyed into the cavity to be filled by means of machines, characterized in that the mixture consists of a prefabricated flowable mixture of very fine sands (see DIN-standard 4226) and/or rock flours (see standard TL-Min. 78), as they are obtained as by-products in the gravel production, and water, with a water content from 25 to 40 percent by weight and a content of up to 5 percent by weight of (a) hydraulic binder(s).

2. Process as claimed in claim 1, characterized in that the flowable filling mixture contains from 25 to 35 percent by weight and in particular about 30 percent by weight of water.

3. Process as claimed in claims 1 and 2, characterized in that the flowable filling mixture contains from 2 to 5 percent by weight and in particular about 3 percent by weight of (a) hydraulic binder(s).

4. Process as claimed in claims 1 to 3, characterized in that the flowable filling mixture additionally contains up to 5 percent by weight, preferably 1,0 to 4,0 percent by weight and in particular about 3,0 percent by weight of (a) hydraulic additive(s).

5. Process as claimed in claim 4, characterized in that as latent-hydraulic additive electrostatic precipitator ash and/or other puzzolanes are used.

6. Process as claimed in claims 1 to 5, characterized in that the prefabricated flowable mixture is conveyed to the point of insertion by means of a concrete truck mixer.

7. Process as claimed in claims 1 to 6, characterized in that the flowable mixture is conveyed into the cavity to be filled by means of pumps.

8. Process as claimed in claims 1 to 6, characterized in that the flowable mixture is conveyed into the cavity to be filled by means of an inclined chute, channel or pipe.

## Revendications

1. Un procédé de remplir des cavités, qui se trouvent sous la surface de la terre, comme des grands récipients stockés stationnairement, des systèmes de pipe-lines et des égouts, au moyen d'une mélange de substance minérale et d'eau, le mélange étant convoyé à l'endroit d'insertion dans la cavité à remplir au moyen de machines, caractérisé en ce que le mélange consiste en un mélange préfabriqué et fluide de sables fins (voir DIN-standard 4226) et/ou de farines minérales (voir standard TL-min. 78), par example obtenus comme sous-produits dans la production de gravier et d'eau, la quantité de l'eau étant comprise entre 25 et 40 % en poids et de liant(s) hydraulique(s), la quantité de liant hydraulique ne dépassant pas 5 % en poids.

2. Un procédé suivant la revendication 1, caractérisé en ce que le mélange de remplissage fluide comprend entre 28 et 35 % en poids et en particulier environ 30 % en poids d'eau.

3. Un procédé suivant les revendications 1 et 2, caractérisé en ce que le mélange de remplissage fluide comprend entre 2 et 5 % en poids et en particulier environ 3 % en poids de liant(s) hydraulique (s).

4. Un procédé suivant les revendications 1 à 3, caractérisé en ce que le mélange de remplissage fluide comprend en plus jusqu'à 5 % en poids, de préférence entre 1,0 et 4,0 % en poids et en particulier environ 3,0 % en poids d'additif(s) hydraulique(s).

5. Un procédé suivant la revendication 4, caractérisé en ce que de la cendre d'une précipitation électrostatique et/ou d'autres pouzzolanes sont employés comme additif hydraulique latent.

6. Un procédé suivant les revendications 1 à 5, caractérisé en ce que le mélange préfabriqué fluide est convoyé à l'endroit d'insertion au moyen d'une bétonnière de transport.

7. Un procédé suivant les revendications 1 à 6, caractérisé en ce que le mélange fluide est convoyé dans la cavité à remplir au moyen de pompes.

8. Un procédé suivant les revendications 1 à 6, caractérisé en ce que le mélange fluide est convoyé dans la cavité à remplir au moyen d'un couloir, d'un caniveau ou d'un tuyau incliné.